# EUROPEAN PATENT APPLICATION

(11) **EP 4 220 463 A1**
(43) Date of publication of application: **02.08.2023**
(21) Application number: 23150825.0
(22) Date of filing: 10.01.2023
(51) Int. Cl.: G06F 21/60

(54) **PROCESSOR CORE UNIQUE ENCRYPTION**

(30) Priority: 28.01.2022 US 202217588055
(71) Applicant: Honeywell International Inc., Charlotte, NC 28202 (US)
(72) Inventor: DRISCOLL, Kevin Raymond, Charlotte, 28202 (US)
(74) Representative: Haseltine Lake Kempner LLP

(57) **Abstract**

Systems and methods for processor core unique encryption are described herein. In certain embodiments, a system includes a multi-core processor comprising a plurality of cores. The system also includes a shared memory accessible to the plurality of cores. Further, the system includes a plurality of core memories, wherein each core memory is exclusively accessible to an associated core in the plurality of cores. Moreover, one or more cores in the plurality of cores creates encrypted data accessible to the one or more cores such that the encrypted data is secured from being accessed by one or more other cores in the plurality of cores. Additionally, the one or more cores store a crypto-state within associated core memories in the plurality of core memories.

## Description

### BACKGROUND

Microprocessors can encrypt data for transmission to external destinations. Also, microprocessors can decrypt data received from external sources. The microprocessors perform this encryption and decryption using conventional techniques. In a multi-core microprocessor, the cores typically encrypt data for transmission to external destinations, as if the cores are a common source. Also, multi-core microprocessors decrypt incoming data from external sources before routing the data to the destination core(s). Amongst the different cores in the multi-core microprocessor, the cores read and write data without encryption.

### SUMMARY

Systems and methods for processor core unique encryption are described herein. In certain embodiments, a system includes a multi-core processor comprising a plurality of cores. The system also includes a shared memory accessible to the plurality of cores. Further, the system includes a plurality of core memories, wherein each core memory is exclusively accessible to an associated core in the plurality of cores. Moreover, one or more cores in the plurality of cores creates encrypted data accessible to the one or more cores such that the encrypted data is secured from being accessed by one or more other cores in the plurality of cores. Additionally, the one or more cores store a crypto-state within associated core memories in the plurality of core memories.

### DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a block diagram illustrating a multi-core processor that may host processor core unique encryption according to an aspect of the present disclosure;
FIG. 2 is a block diagram illustrating an example of a cryptosystem used to implement processor core unique encryption according to an aspect of the present disclosure; and
FIG. 3 is a flowchart diagram of a method for providing processor core unique encryption according to an aspect of the present disclosure.

Under common practice, the various described features are not drawn to scale but are drawn to emphasize specific features relevant to the example embodiments.

### DETAILED DESCRIPTION

In the following detailed description, reference is made to the accompanying drawings that form a part of the present description and in which is shown, through illustration, specific illustrative embodiments. However, it is to be understood that other embodiments may be used and that logical, mechanical, and electrical changes may be made.

The present disclosure describes systems and methods for processor core unique encryption. Increasing cybersecurity concerns and the proliferation of multi-core processors have led to a desire for separate security enclaves for each core in a multi-core processor integrated circuit. The present disclosure describes embodiments that allow a core to encrypt and decrypt data relative to other cores in a multi-core microprocessor/microcontroller or other processing device having multiple cores.

Processor core unique encryption applies in different situations. In a first situation, a first core in a multi-core processor secures data in memory commonly accessible to other cores in the multi-core processor. The first core stores data in the commonly accessible memory in an encrypted format that only the first core can decrypt. In a second situation, a first core communicates data with one or more other cores in the multi-core processor while securing the data from remaining cores in the multi-core processor that are not parties to the communicated data. For example, a first core may communicate data with a second core. The data sent between the first core and the second core may be encrypted such that the data is secured from access by other remaining cores in the multi-core processor. In a third situation, a core within the multi-core processor communicates data with an external device where the communicated data is encrypted from other cores within the multi-core processor.

In certain embodiments, an encryption algorithm performs the encryption and decryption for the multi-core processor. The encryption algorithm has low latency to limit the delay introduced during the process flow. The multi-core processor also performs the algorithm using relatively few instructions, limiting the amount of memory consumed to execute the algorithm.

In additional embodiments, the size of the crypto-state may be sufficiently small to fit within memory accessible only to a particular core, preferably within registers for a core. As used herein, the phrase "crypto-state" refers to data to remain secret and includes keying material, plain text, and derivatives, such as partial results generated by the encryption algorithm. The term "crypto-state", in one embodiment, does not include the full encrypted data produced by the encryption algorithm. The crypto-state is stored within memory, accessible to the particular core (i.e., within a core's registers), to prevent other cores from accessing parts of the crypto-state. As used herein, the term "secret" refers to a property of an item, where the property limits access to a secret item to those authorized. One having skill in the art may also refer to "secret" using a mix of secrecy, privacy, and private.

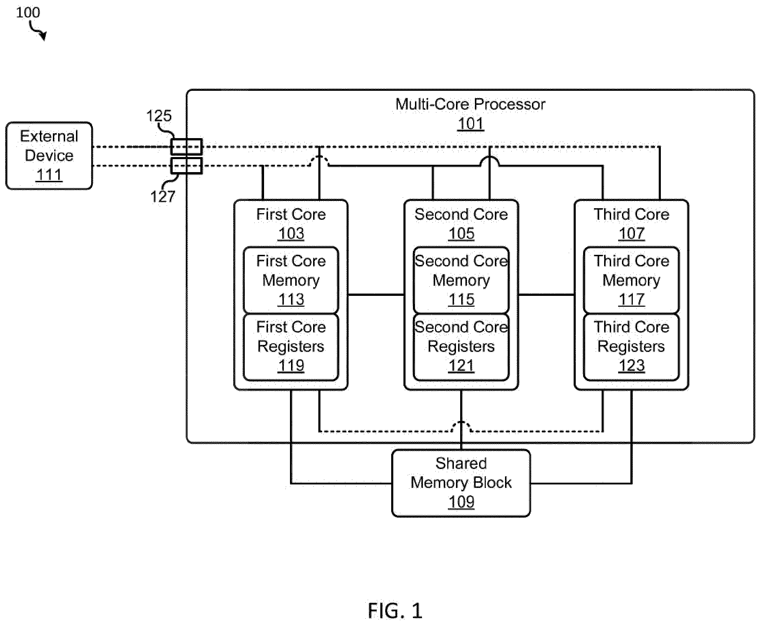

FIG. 1 is a block diagram of a system 100 for providing processor core unique encryption. The system 100 may include a multi-core processor 101. The multi-core processor 101 may be a processing device having multiple processing units. In some implementations, the different processing units are formed on a single integrated circuit chip. Each of the different processing units may be referred to as a core. The multi-core processor 101 processes information on the different cores in a multitasking manner. As illustrated, the multi-core processor 101 includes a first core 103, a second core 105, and a third core 107. While only three cores are illustrated and described herein, the multi-core processor 101 may likely include a different number of cores. For example, the multi-core processor 101 may include two, four, eight, or other number of cores.

In certain embodiments, the multi-core processor 101 may function as a microcontroller or microprocessor within a more extensive system. For example, the multi-core processor 101 may function as part of a network-on-chip (NOC) or systemon-chip (SOC). The different cores of the multi-core processor 101 may also access data stores on core-specific memory and shared memory. For example, the first core 103, second core 105, and third core 107 may access data stored on a shared memory 109. However, the first core 103 accesses data stored in a first core memory 113, the second core 105 accesses data stored in a second core memory 115, and the third core 107 accesses data stored in a third core memory 117. In some embodiments, the first core memory 113, second core memory 115, third core memory 117 may be cache associated with a specific core. Additionally, each core may store data in associated register sets, where a register set stores memory quickly accessible to an associated core. For example, the first core 103 stores data in first core registers 119, the second core 105 stores data in second core registers 121, and the third core 107 stores data in third core registers 123.

In certain embodiments, the shared memory 109, first core memory 113, second core memory 115, third core memory 117, first core registers 119, second core registers 121, and third core registers 123 may store instructions and data. The instructions may direct the operation of the cores in the multi-core processor 101. A core may use the data for internal purposes. Cores may also transmit the data to other cores in the multi-core processor 101 or to an external device 111 connected to the multi-core processor 101. The multi-core processor 101, and the cores therein, may be implemented using software, firmware, hardware, or other appropriate combinations thereof. The multi-core processor 101, and the cores therein, may be supplemented by, or incorporated in, specially-designed application-specific integrated circuits (ASICs) or field programmable gate arrays (FPGAs). The multi-core processor 101 may be a general or special purpose computer or processor, or other programmable logic device. The multi-core processor 101 and other computation devices may also include or function with software programs, firmware, or other computer-readable instructions for carrying out various process tasks, calculations, and control functions used in the present methods and systems.

Further, computer-executable instructions (such as program modules or components) may implement the methods described in this description. At least one core of the multi-core processor 101 may execute the computer-executable instructions. Software, firmware, or other execution-capable devices may also execute the computer-readable instructions for carrying out various process tasks, calculations, and generation of data used in the operations of the described methods. The computer-readable instructions may be stored as part of one or more appropriate computer-program products, where a computer-program product may be a set of computer-readable instructions or data structures stored on a computer-readable medium. The computer-readable medium may be a medium that stores data that can be accessed by the cores of the multi-core processor 101 or other computing device. In certain implementations, the computer-readable medium may form part of the core-specific memory or the shared memory 109.

Computer-readable media may include non-volatile memory devices. Non-volatile memory devices may include semiconductor memory devices such as cache memory, registers, random access memory (RAM), read-only memory (ROM), electrically erasable programmable ROM (EEPROM), or flash memory devices. The non-volatile memory devices may also include magnetic disks (such as internal hard disks or removable disks), optical storage devices (such as compact discs (CDs), digital versatile discs (DVDs), Blu-ray discs), or other media that can store computer-executable instructions or data structures.

Typically, multi-core processors do not support the encryption and decryption of internally transmitted data (transmitted from one core to another core). Also, multi-core processors do not support encrypting and decrypting data on one core differently from the encryption and decryption of data on another core. In sum, while a core may secure data from another core by storing the data in a core-specific memory location using hardware security, multi-core processors do not support the securing of data on a core relative to another core using encryption-based security.

In certain embodiments, the multi-core processor 101 supports securing data on a core relative to another core using encryption-based security. As described above, the multi-core processor 101 supports securing data on one core from all other cores, securing data involved in intra-core communications from non-involved cores, and securing data involved in communications between one or more cores and any external destinations (such as the external device 111). For example, different cores in the multi-core processor 101 may be assigned to different enclaves, where each enclave has different encryption keys. Thus, different cores may share data with each other based on the enclaves to which the cores belong. As used herein, an enclave refers to a secure execution environment for executing code on data, wherein access to that data is restricted to code belonging to that enclave

In exemplary embodiments, the encryption algorithms executed by the multi-core processor 101 may generate various keys used to encrypt and decrypt data. For example, the multi-core processor 101 may generate public keys, private keys, and secret keys. As used herein, a public key refers to a shared key between at least two parties that need not be kept secret. Key exchange algorithms like the Diffie-Hellman algorithm or other key exchange algorithms may be used by cores and other devices to exchange secret keys that are kept secret via the exchange algorithm communication.

In certain embodiments, the first core 103 may secure data from being accessed by the second core 105 and the third core 107 within the shared memory 109. To securely save the data within the shared memory 109, the first core 103 may use a secret key to encrypt and decrypt the data such that only the first core 103 can read the data. To acquire a secret key, the first core 103 may generate the secret key by itself or acquire the secret key from another source.

In exemplary embodiments, the first core 103 may generate a secret key for encrypting data. For example, the first core 103 may include a random number generator. Upon power-up (or more frequently), the first core 103 may direct the random number generator to generate a secret key. The first core 103 stores the secret key in the first core memory 113 or other memory only accessible to the first core 103. Additionally, the first core 103 may use physically unclonable information to generate the secret key. Physically unclonable information is information uniquely accessible or identifiable by the first core 103 and would be difficult to generate or identify by another core or device. For example, upon power-up, the first core registers 119 may attain an initial state based on temperature and integrated circuit manufacturing process variation parameters. The first core 103 may save the initial state of one or more bit locations within the first core registers 119 as the secret key in memory only accessible to the first core 103. Alternatively, the first core 103 may use the initial state of the locations used to store the secret key as the secret key by allowing the locations to retain their initial states. In an additional implementation, the first core 103 may hash identification information (such as a unique identification number or address) for the first core 103 within the multi-core processor 101 to generate the secret key.

In some embodiments, the first core 103 may acquire the secret key from an external device 111. For example, the first core 103 may connect to a bus that connects to an external bus through a port 125. The first core 103 may secure the bus for communications with the external device 111. The external device 111 may then load a secret key over the secured bus into a memory location only accessible by the first core 103, such as the first core memory 113. Alternatively, the first core 103 may connect to the external device 111 through a dedicated port such as a joint test action group (JTAG) port 127 that operates according to the IEEE 1149 standard. The external device 111 may provide secret keys to the first core 103 through the JTAG port 127 serially using scan chains.

In certain embodiments, the first core 103 may communicate with one or more of the second core 105 and the third core 107 such that the communications are secured from being accessed by cores that are not parties to the communication. For example, the first core 103 may communicate with the second core 105, where the communications are secured from being accessed by the third core 107. These and other access/no-access patterns among the cores and/or between the cores and external devices are possible via cryptographic key management schemes known to one having skill in the art

In certain embodiments, the multi-core processor 101 may use an encryption algorithm with low latency to limit the delay introduced during the process flow. The multi-core processor may also perform the algorithm using relatively few instructions, limiting the amount of memory consumed to execute the algorithm. A core performs the algorithm within the memory associated with the core. For example, the first core 103 performs the algorithm using instructions and crypto-state data stored within the first core memory 113 or the first core registers 119. Accordingly, other cores in the multi-core processor 101 cannot access the instruction or data used to execute the encryption and decryption algorithms.

The size of the crypto-state is sufficiently small to fit within memory accessible only to a particular core. For example, the private and secret keys generated during the processing of the algorithm by the first core 103 is stored within the first core memory 113, the first core registers 119, or combination of the first core memory 113 and first core registers 119. Thus, the crypto-state is stored within memory accessible to the particular core to prevent other cores from accessing any part of the crypto-state. Crypto-state that is not immediately used by a core can be stored in shared memory as long as that crypto-state is itself encrypted.

Many encryption systems can be used for the encryption used in this invention. One such encryption system is described in K. Driscol, BeepBeep: Embedded Real-Time Encryption, Fast Software Encryption 2002/Lecture Notes in Computer Science Vol. 2365, February/May, 2002. Portions of this encryption system are described in United States Patent No. 6,760,440, which is titled "ONE'S COMPLEMENT CRYPTOGRAPHIC COMBINER;" United States Patent No. 6,763,363, which is titled "COMPUTER EFFICIENT LINEAR FEEDBACK SHIFT REGISTER;" United States Patent No. 6, 804, 354, which is titled "CRYPTOGRAPHIC ISOLATOR USING MULTIPLICATION;" and United States Patent No. 7,277,543, which is titled "CRYPTOGRAPHIC COMBINER USING TWO SEQUENTIAL NON-ASSOCIATIVE OPERATIONS," which patents are incorporated herein by reference. Additional cryptographic systems having the desired latency and small memory consumption qualities may also be used to implement core-specific encryption.

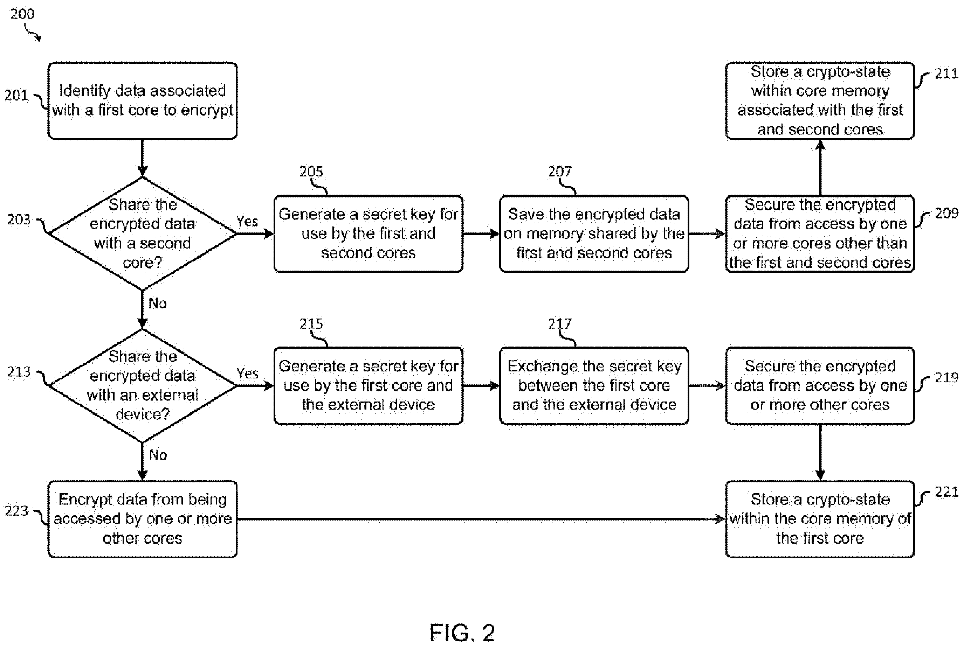

FIG. 2 illustrates a flowchart diagram of a method 200 for providing processor core unique encryption. The method 200 proceeds at 201, where data associated with a first core is identified for encryption. For example, on a processor having multiple cores, a core in the multiple cores identifies data to be encrypted. After identifying the data for encryption, the method 200 proceeds at 203, where the method 200 determines whether to share the encrypted data with a second core 203. For example, the core in the multiple cores determines that the data to be encrypted will be accessed by a second core of the processor. If the method 200 determines that the encrypted data will not be shared with a second core, the method 200 proceeds to 213, where the method 200 determines whether to share the encrypted data with an external device. For example, the core in the multiple cores determines that the encrypted data will be communicated to a device outside the processor.

In certain embodiments, when the method 200 determines that the encrypted data will be shared with a second core, the method 200 proceeds at 205, where a secret key is generated for use by the first and second cores. For example, one or both of the first and second cores may generate a secret key which can then be exchanged between the first and second cores. When the secret key is generated, the method 200 proceeds at 207, where the encrypted data is saved on memory shared by the first and second cores. Further, the method 200 proceeds at 209, where the encrypted data is secured from being accessed by one or more cores other than the first and second cores. For example, a portion of memory that is accessible to the processor may be partitioned in such a way that the portion of memory is only accessible to the first and second cores. The first and second cores may encrypt the data using the secret key and store the secret key and data within the portion of memory. Additionally, the process 200 may proceed at 211, where a crypto-state is stored within core memory associated with the first and second cores. For example, either the first core and second core may save the crypto-state in separate core memories or within the shared memory.

In exemplary embodiments, when the method 200 determines that the encrypted data will be shared with an external device, the method 200 proceeds at 215, where a secret key is generated for use by the first core and the external device. For example, one or both of the first core and the external device may generate a secret key which can then be exchanged between the first core and the external device. When the secret key is generated, the method 200 proceeds at 217, where the secret key is exchanged between the first core and the external device. Further, the method 200 proceeds at 219, where the encrypted data is secured from being accessed by one or more cores other cores. For example, a portion of memory that is accessible to the processor may be partitioned in such a way that the portion of memory is only accessible to the first core. The first core may encrypt the data using the secret key and store the secret key and data within the associated portion of memory. Additionally, the process 200 may proceed at 221, where a crypto-state is stored within core memory associated with the first core. The external device may encrypt the data according to encryption methods known to one having skill in the art.

In further embodiments, where the method 200 determines that the encrypted data will be used only by a single core, the method 200 proceeds at 223, where the data is encrypted from being accessed by one or more other cores. For example, a portion of memory that is accessible to the processor may be partitioned in such a way that the portion of memory is only accessible to the first core. The first core may encrypt the data using a secret key or other encryption method and store the encrypted data within the associated portion of memory. Additionally, the process 200 may proceed at 221, where a crypto-state is stored within core memory associated with the first core. While the method 200 illustrates the sharing of encrypted data between two cores of a multi-core processor, the encrypted data may also be shared between any subset of the cores of a multi-core processor. Also, the core can share the encrypted data with any number of external devices.

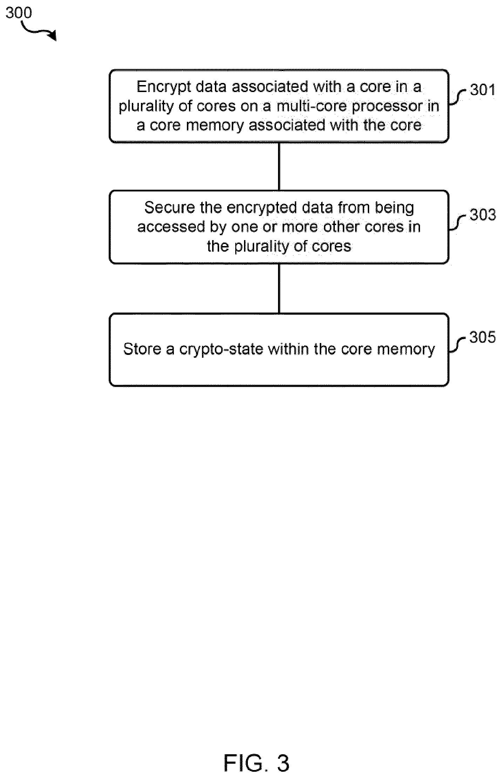

FIG. 3 illustrates a flowchart diagram of a method 300 for providing processor core unique encryption. The method 300 proceeds at 301, where data associated with a core in a plurality of cores on a multi-core processor is encrypted in a core memory associated with the core. In particular, each core may have an associated memory to which the core has exclusive access. The method 300 proceeds at 303, where the encrypted data is secured from being accessed by one or more other cores in the plurality of cores. The method 300 proceeds at 305, where a crypto-state is stored within the core memory.

### Example Embodiments

Example 1 includes a system comprising: a multi-core processor comprising a plurality of cores; a shared memory accessible to the plurality of cores; and a plurality of core memories, wherein each core memory is exclusively accessible to an associated core in the plurality of cores; wherein one or more cores in the plurality of cores creates encrypted data accessible to the one or more cores such that the encrypted data is secured from being accessed by one or more other cores in the plurality of cores; and wherein the one or more cores store a crypto-state within associated core memories in the plurality of core memories.

Example 2 includes the system of Example 1, wherein a first core in the one or more cores stores the encrypted data on the shared memory.

Example 3 includes the system of any of Examples 1-2, wherein a first core in the one or more cores creates the encrypted data in a first core memory in the plurality of core memories associated with the first core.

Example 4 includes the system of any of Examples 1-3, wherein the first core stores a first secret key in a first core memory in the plurality of core memories.

Example 5 includes the system of Example 4, wherein the first core acquires the first secret key by at least one of: generating a random number to be used as the first secret key; receiving the first secret key from an external device over a secured bus; receiving the first secret key from the external device through a dedicated port; creating the first secret key from physically unclonable information accessible only to the first core; and hashing identification information for the first core to produce the first secret key.

Example 6 includes the system of any of Examples 1-5, wherein a first core and a second core in the plurality of cores encrypt communications between the first core and the second core such that the communications are secured against cores in the plurality of cores other than the first core and the second core.

Example 7 includes the system of Example 6, wherein the first core and the second core generate a secret key using at least one of: generating the secret key by at least one of the first core and the second core and providing the secret key to both of the first core and the second core; and performing a key exchange protocol.

Example 8 includes the system of Example 7, wherein the first core and the second core store the secret key in at least one of: a first core memory in the plurality of core memories and a second core memory in the plurality of core memories; and an additional shared memory accessible by only the first core and the second core.

Example 9 includes the system of any of Examples 1-8, wherein a first core in the plurality of cores encrypts communications with an external device.

Example 10 includes the system of Example 9, wherein the first core and the external device generate shared secret keys using a key exchange protocol.

Example 11 includes the system of any of Examples 1-10, wherein a core memory in the plurality of core memories comprises at least one of: memory dedicated to a core in the plurality of cores; a cache memory uniquely associated with the core in the plurality of cores; and a register set uniquely associated to a core in the plurality of cores.

Example 12 includes a method comprising: encrypting data associated with a core in a plurality of cores on a multi-core processor in a core memory associated with the core, the core memory being part of a plurality of core memories, wherein each core memory is exclusively accessible to an associated core in the plurality of cores; securing the encrypted data from access by one or more other cores in the plurality of cores; and storing a crypto-state within the core memory.

Example 13 includes the method of Example 12, wherein securing the encrypted data from being accessed further comprises saving the encrypted data on memory shared by the plurality of cores.

Example 14 includes the method of any of Examples 12-13, further comprising storing a secret key for the core in the core memory.

Example 15 includes the method of Example 14, further comprising acquiring the secret key by the core through at least one of: generating a random number to be used as the secret key; receiving the secret key from an external device over a secured bus; receiving the secret key from the external device through a dedicated port; creating the secret key from physically unclonable information associated with a current state of the core accessible only to the first core; and hashing identification information for the core to produce the first secret key.

Example 16 includes the method of any of Examples 12-15, wherein the encrypted data is associated with communications between the core and a second core in the plurality of cores and the encrypted data is secured against cores in the plurality of cores other than the core and the second core.

Example 17 includes the method of Example 16, wherein the core and the second core generate a secret key using at least one of: generating the secret key by at least one of the core and the second core and providing the secret key to both of the core and the second core; and performing a key exchange protocol.

Example 18 includes the method of any of Examples 12-17, wherein the core encrypts communications with an external device.

Example 19 includes a system comprising: a multi-core processor comprising a plurality of cores; a shared memory accessible to the plurality of cores; and a plurality of core memories, wherein each core memory in the plurality of core memories is exclusively accessible to an associated core in the plurality of cores; wherein a first core in the plurality of cores encrypts data accessible to the first core and stores the encrypted data such that the encrypted data is secured from being accessed by one or more other cores in the plurality of cores; wherein the first core in the one or more cores stores the encrypted data on the shared memory; wherein the first core and a second core in the plurality of cores encrypts communications between the first core and the second core such that the communications are secured against being accessed by cores in the plurality of cores other than the first core and the second core; wherein the first core in the plurality of cores encrypts additional communications with an external device; and wherein the plurality of cores stores a crypto-state within associated core memories in the plurality of core memories.

Example 20 includes the system of Example 19, further comprising storing a secret key for the first core in a core memory in the plurality of core memories that is exclusively accessible to the first core.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
a multi-core processor (101) comprising a plurality of cores (103, 105, 107);
a shared memory (109) accessible to the plurality of cores (103, 105, 107); and
a plurality of core memories (113, 115, 117), wherein each core memory is exclusively accessible to an associated core in the plurality of cores (103, 105, 107);
wherein one or more cores in the plurality of cores (103, 105, 107) creates encrypted data accessible to the one or more cores such that the encrypted data is secured from being accessed by one or more other cores in the plurality of cores (103, 105, 107); and
wherein the one or more cores store a crypto-state within associated core memories in the plurality of core memories (113, 115, 117).

2. The system of claim 1, wherein a first core (103) in the one or more cores stores the encrypted data on the shared memory (109).

3. The system of claim 1, wherein a first core (103) in the one or more cores creates the encrypted data in a first core memory (113) in the plurality of core memories associated with the first core (103).

4. The system of claim 1, wherein the first core (103) stores a first secret key in a first core memory (113) in the plurality of core memories (113, 115, 117), wherein the first core (103) acquires the first secret key by at least one of:
generating a random number to be used as the first secret key;
receiving the first secret key from an external device (111) over a secured bus;
receiving the first secret key from the external device (111) through a dedicated port (125, 127);
creating the first secret key from physically unclonable information accessible only to the first core (103); and
hashing identification information for the first core (103) to produce the first secret key.

5. The system of claim 1, wherein a first core (103) and a second core (105) in the plurality of cores (103, 105, 107) encrypt communications between the first core (103) and the second core (105) such that the communications are secured against cores in the plurality of cores (103, 105, 107) other than the first core (103) and the second core (105), wherein the first core (103) and the second core (105)generate a secret key using at least one of:
generating the secret key by at least one of the first core (103) and the second core (105) and providing the secret key to both of the first core (103) and the second core (105); and
performing a key exchange protocol.

6. The system of claim 5, wherein the first core (103) and the second core (105) store the secret key in at least one of:
a first core memory (113) in the plurality of core memories (113, 115, 117) and a second core memory (115) in the plurality of core memories (113, 115, 117); and
an additional shared memory accessible by only the first core and the second core.

7. The system of claim 1, wherein a first core (103) in the plurality of cores (103, 105, 107) encrypts communications with an external device (111), wherein the first core (103) and the external device (111) generate shared secret keys using a key exchange protocol.

8. A method comprising:
encrypting data associated with a core (103) in a plurality of cores (103, 105, 107) on a multi-core processor in a core memory (113) associated with the core (103), the core memory (113) being part of a plurality of core memories (113, 115, 117), wherein each core memory is exclusively accessible to an associated core in the plurality of cores (103, 105, 107);
securing the encrypted data from being accessed by one or more other cores in the plurality of cores (103, 105, 107); and
storing a crypto-state within the core memory (113).

9. The method of claim 8, wherein the encrypted data is associated with communications between the core (103) and a second core (105) in the plurality of cores (103, 105, 107) and the encrypted data is secured against cores in the plurality of cores (103, 105, 107) other than the core (103) and the second core (105).

10. The method of claim 9, wherein the core encrypts communications with an external device (111).
